Europäisches Patentamt

European Patent Office

Office européen des brevets

Veröffentlichungsnummer: **0 290 832**

A1

# EUROPÄISCHE PATENTANMELDUNG

Anmeldenummer: 88106360.6

Int. Cl.4 **B60R 5/00 , B60R 27/00**

Anmeldetag: 21.04.88

Priorität: 06.05.87 DE 8706471 U

Veröffentlichungstag der Anmeldung:
17.11.88 Patentblatt 88/46

Benannte Vertragsstaaten:
CH DE ES FR GB LI SE

Anmelder: Honerkamp, Johannes
Ebbendorfer Strasse 14
D-4517 Hilter 2(DE)

Erfinder: Honerkamp, Johannes
Ebbendorfer Strasse 14
D-4517 Hilter 2(DE)

Vertreter: Stracke, Alexander, Dipl.-Ing. et al
Patentanwälte Dipl.-Ing. Loesenbeck
Dipl.-Ing. Stracke Jöllenbecker Strasse 164
Postfach 5605
D-4800 Bielefeld 1(DE)

## Kraftwagen.

Die Außenflächen von Kraftwagen sind normalerweise verschmutzt. Beim Be-und Entladen eines Kofferraumes oder eines Laderaumes passiert es deshalb immer wieder, daß die Kleidung der den Be- oder Entladevorgang durchführenden Person verschmutzt wird. Häufig wird zum Be-und Entalden noch besonders hochwertige Kleidung getragen. Diese Nachteile sollen durch die Erfindung vermieden werden.

Unterhalb der Ladekante (14) wird innenseitig ein Rand einer Abdeckplane (15) festgelegt. Diese Abdeckplane wird beim Be-oder Entladen über die äußeren, unterhalb der Ladekante liegenden Flächen des Fahrzeuges gelegt. Vor dem Schließen der Tür bzw. der Klappe (13) wird die Abdeckplane (15) über die in den Laderaum eingestellten Gegenstände gelegt und bietet einen zusätzlichen Schutz.

Die Abdeckplane ist normalerweise eine Kunststoffolie, die an einer Seite einen durch einen Abdeckstreifen geschützten Klebestreifen aufweist. Dadurch ist vom Besitzer des Kraftwagens eine besonders leichte Befestigung möglich.

die Erfindung erstreckt sich insbesondere auf Personen-und Kombinationskraftwagen.

Fig.1

## Kraftwagen

Die vorliegende Neuerung bezieht sich auf einen Kraftwagen, insbesondere auf einen Personen- oder Kombinationskraftwagen, mit einem Laderaum, der eine durch eine Tür oder durch eine Klappe öffen-und schließbare Ladeöffnung aufweist.

Kraftwagen der in Rede stehenden Art sind allgemein bekannt und werden üblicherweise als Auto oder Automobile bezeichnet. Es wird in Abhängigkeit von der Bauweise insbesondere zwischen einem Personenkraftwagen und einem Kombinationskraftwagen unterschieden. Bei einem Personenkraftwagen ist üblicherweise die Heckpartie als ein allseitig geschlossener Laderaum ausgebildet, sofern die Klappe geschlossen ist. Dieser Laderaum wird üblicherweise als Kofferraum bezeichnet. Bei einem Kombinationskraftwagen. fehlt die Trennung zwischen Lade-und Sitzraum. Außerdem ist noch eine weitere Bauweise bekannt, bei der durch Umklappen der Rückenlehne der hinteren Sitze der Laderaum vergrößert werden kann. Außerdem sind noch Kraftwagen mit in der Frontpartie liegendem Laderaum bekannt.

Beim Be-und Entladen des Laderaumes wird es als sehr nachteilig empfunden, daß sich die den Laderaum be-bzw. entladende Person durch Berührung mit den üblicherweise verschmutzten Außenflächen des Kraftwagens die Kleidung verschmutzt. Die Verschmutzung ist dann besonders unangenehm, wenn hochwertige Kleidung getragen wird.

Der vorliegenden Neuerung liegt demzufolge die Aufgabe zugrunde, einen Kraftwagen der eingangs genannten Art so zu gestalten, daß eine Verschmutzung der Kleidung der den Laderaum be-oder entladenden Person vermieden wird.

Zur Lösung der gestellten Aufgabe ist neuerungsgemäß vorgeseh, daß an innenliegenden Teilflächen des die Ladeöffnung begrenzenden Randes eine aus einem flexiblen Material bestehende Abdeckplane festgelegt ist.

Es ist nunmehr in verblüffend einfacher Weise möglich, daß der Laderaum be-oder entladen wird, ohne daß auch bei einem stark verschmutzten Kraftwagen die Gefahr besteht, daß die Kleidung beschmutzt wird. Dazu kann bei geöffneter Tür bzw. Klappe die Abdeckplane über die Wandung gelegt werden, über die die Gegenstände zu bringen sind. Üblicherweise ist dies bei Fahrzeugen mit im Heck angeordnetem Laderaum die oberhalb der Stoßstange liegende und parallel zu den Fahrzeugachsen stehende hintere Wandung des Aufbaus des Kraftwagens. Der besondere Vorteil liegt darin, daß die Abdeckplane an Teilinnenflächen des Laderaums festgelegt ist, so daß sie ständig mitgeführt wird. Die Abdeckplane wirkt auch nicht störend, da sie nach dem Beladen des Laderaums vor dem Schließen der Klappe bzw. der Tür über die Gegenstände gelegt wird. Vor dem Entladen wird die Abdeckplane dann über die Wandung gelegt.

Zweckmäßigerweise ist die Abdeckplane an dem äußeren und parallel zu den Achsen des Kraftwagens verlaufenden Teilstück des den Laderaum begrenzenden Randes festgelegt. Dieses Teilstück wird üblicherweise als die Ladekante bezeichnet. Durch eine derartige Festlegung wird die Innenfläche des Laderaumes, die von der Abdeckplane abgedeckt ist, auf ein Minimum reduziert, so daß für die Funktion der Abdeckplane die geringstmöglichen Abmessungen erreicht werden. Zweckmäßigerweise erstreckt sich die Abdeckplane über die gesamte oder annähernd gesamte Breite der Ladeöffnung. Die Länge der Abdeckplane sollte so groß sein, daß sie sich zumindest über die vorstehende Stoßstange erstreckt. Die optimale Größe der Abdeckplane ist vom Fahrzeugtyp abhängig, da die Höhe der Ladekante und die Breite der Ladeöffnung typenbedingt sind.

Gemäß einem bevorzugten Ausführungsbeispiel ist vorgesehen, daß die Abdeckplane quadratisch oder rechteckig ausgebildet ist und an einem äußeren Randbereich mittels einer Beschichtung aus einem Permanentkleber an der Innenfläche der den Laderaum begrenzenden Wandung festgelegt ist. Die rechteckige oder quadratische Form bietet den Vorteil einer einfacheren Herstellung, beispielsweise aus einer zu einer Rolle aufgewickelten Bahn. Die Festlegung mittels eines Permanenklebers ist insbesondere bei einer Nachrüstung eines Kraftwagens vorteilhaft, da der mit dem Permanenkleber versehene Streifen mit einer Schutzfolie versehen ist, wobei die Schutzfolie vor dem Festkleben an der Innenfläche abgezogen werden muß. Anstelle einer Klebeverbindung könnte der Rand jedoch auch durch mehrere Druckknöpfe oder durch mehrere Magnetplatten erfolgen.

Weitere Kennzeichen und Merkmale einer vorteilhaften Ausgestaltung der vorliegenden Neuerung sind Gegenstand von weiteren Unteransprüchen und ergeben sich aus der nachfolgenden Beschreibung eines bevorzugten Ausführungsbeispiels.

Es zeigen:

Fig. 1 die Rückansicht eines Personenkraftwagens mit Stufenheck in perspektivischer Darstellung mit geöffneter Klappe und ausgelegter Abdeckplane und

Fig. 2 einen Teilschnitt nach der Linie II-II in der Fig. 1 in vergrößerter Darstellung.

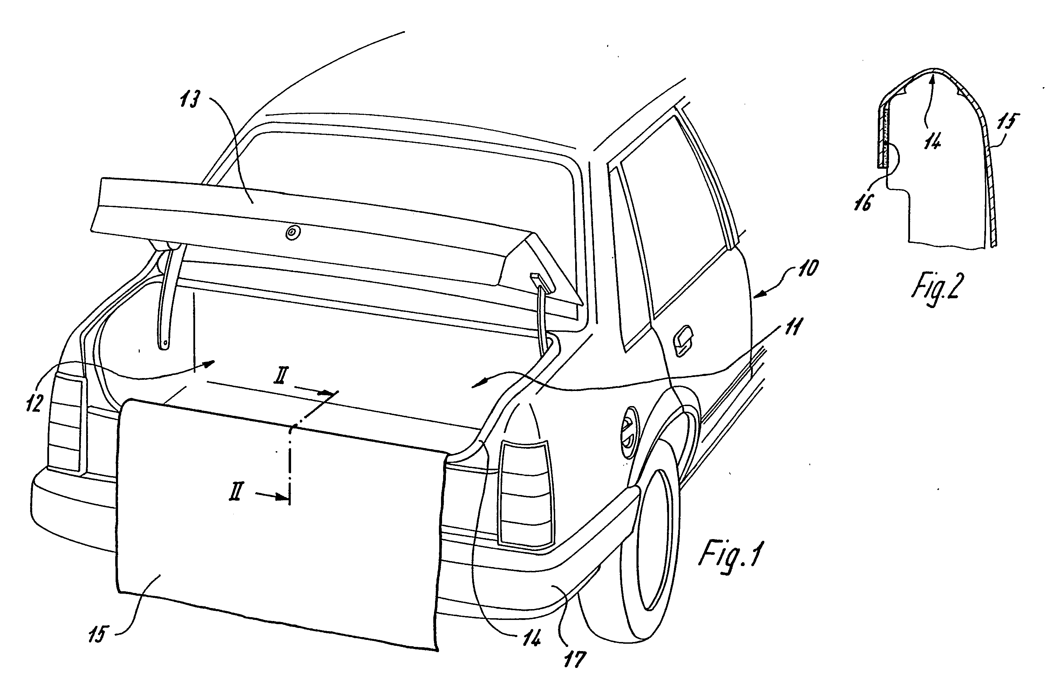

Die in der Fig. 1 aufgezeigte Heckpartie eines Personenkraftwagens 10 weist einen sich im wesentlichen über die gesamte Breite des Personen kraftwagens 10 erstreckenden Laderaum 11 auf, der zur Bildung einer Ladeöffnung 12 im wesentlichen nach oben hin offen ist. Die Ladeöffnung 12 ist durch eine schwenkbare Klappe 13 verschließbar. Die Grundkontur der Ladeöffnung 12 ist annäherd viereckig ausgebildet. Das dem Sitz- bzw. Personenraum abgewandt liegende Teilstück des die Ladeöffnung 12 begrenzenden Randes wird in der Automobiltechnik allgemein als die Ladekante bezeichnet. In den Fig. 1 und 2 ist die Ladekante mit dem Bezugszeichen 14 versehen. Im vorliegenden Ausführungsbeispiel ist an der innen und unterhalb der Ladekante 14 liegenden Fläche der den Laderaum 11 teilweise begrenzenden Hinterwand ein Randbereich einer viereckigen Abdeckplane 15 mittels einer Klebemittelschicht 16 befestigt. Die Klebemittelschicht 16 ist als durchgehender Streifen vorgesehen, mit dem Vorteil einer einfacheren Herstellung und einer durchgehenden Verklebung des jeweiligen Randes. In nicht dargestellter Weise ist jedoch auch möglich, die Abdeckplane 5 beispielsweise durch nach Art eines Druckknopfes gestaltete Verbindungsmittel festzulegen. Hierbei müßte jedoch ein Teil an der den Laderaum 11 begrenzenden Rückwand angebracht sein. Ferner ist es denkbar, die Abdeckplane 15 durch Magnetplatten festzulegen, mit dem Vorteil einer leichteren Abnahme der Abdeckplane, sofern sie aus irgendwelchen Gründen nicht benötigt wird. Wie die Fig. 1 zeigt, ist die Breite der Abdeckplane 15 ein klein wenig geringer als die Breite der Ladeöffnung 12. Die Breite ist typenbedingt. Wenn die Abdeckplane 15 sich ausschließlich über den geradlinigen Verlauf der Ladekante 14 erstreckt, wird eine Faltenbildung im bogen-oder kurvenförmigen Verlauf vermieden. Die Länge der Abdeckplane 15 sollte so groß sein, daß zumindest die gegenüber der Rückwand vorstehende Stoßstange 17 abgedeckt wird. Da es nicht störend ist, wenn der freie, dem Befestigungsrand gegenüberliegende Rand in einem relativ geringen Abstand zum Erdboden liegt, sollte die Länge der Abdeckplane 15 in etwa dem Abstand der Ladekante 14 vom Boden entsprechen.

Eine besonders preiswerte Lösung wird erreicht, wenn die Abdeckplane aus einer Kunststoffolie gefertigt ist. Sofern die Befestigung mittels einer Klebemittelschicht erfolgt, wird die Außenseite der Klagemittel schicht 16 mit einer Abziehfolie versehen. Die nachträglich Anbringung der Abdeckplane 15 ist dann besonders einfach.

Zur Erhöhung der Unfallsicherheit kann die der Befestigungsseite abgewandt liegende Fläche der Abdeckplane 15 vollflächig oder partiell mit einer reflektierenden Beschichtung versehen werden. Insbesondere bei Dunkelheit wird dann das zu beladende bzw. zu entladende Fahrzeug von anderen Verkehrsteilnehmern gesehen.

In nicht dargestellter Weise könnte auch anstelle einer reflektierenden Beschichtung die der Befestigungsseite abgewandt liegende Fläche mit einem oder mehreren Reflektoren bestückt werden. Ferner ist es denkbar, daß das allgemein bekannte Warnzeichen symbolisch durch Reflektoren oder durch eine reflektierende Beschichtung aufgebracht wird.

Ein weiterer Vorteil ist noch darin zu sehen, daß durch die neuerungsgemäße Ausgestaltung eines Kraftwagens die Ladekante selbst und die unterhalb der Ladekante liegenden Außenflächen des Kraftwagens beim Be-und Entladen gegen ungewollte Beschädigung geschützt werden.

Bei der Ausführung nach der Fig. 2 liegt die Klebemittelschicht 16 an der, bezogen auf die Betriebslage der Abdeckplane 16, der Außenfläche gegenüberliegenden Fläche. Die Außenfläche trägt üblicherweise die reflektierende Beschichtung bzw. die Reflektoren. Im Gegensatz zu der Darstellung nach der Fig. 2 kann jedoch auch die Klebemittelschicht 16 der Außenfläche zugeordnet sein. In diesem Falle würde der der Klebemittelschicht 16 zugeordnete Rand der Abdeckplane 15 nach Art einer Falte um einen Winkel von 180° geknickt. Diese Ausführung bietet in bestimmten Flällen fertigungstechnische Vorteile.

**Ansprüche**

1. Kraftwagen, insbesondere Personen-oder Kombinationskraftwagen, mit einem Laderaum,der eine durch eine Tür oder eine Klappe öffen-und - schließbare Ladeöffnung aufweist, **dadurch gekennzeichnet** , daß an innenliegenden Teilflächen des die Ladeöffnung (12) begrenzenden Randes eine aus einem flexiblen Material bestehende Abdeckplane (15) festgelegt ist.

2. Kraftwagen nach Anspruch 1, dadurch gekennzeichnet, daß die Abdeckplane (15) innenseitig an dem äußeren, dem Personen-bzw. Sitzraum abgewandt liegenden und parallel zu den Achsen des Kraftwagens (10) verlaufenden Teilstück des den Laderaum (15) begrenzenden Randes festgelegt ist.

3. Kraftwagen nach Anspruch 2, dadurch gekennzeichnet, daß dieses Teilstück die Ladekante (14) ist.

4. Kraftwagen nach Anspruch 1, dadurch gekennzeichnet, daß die Abdeckplane (15) quadratisch oder rechteckig ausgebildet ist und an einem Rand mittels einer Klebemittelschicht (16) aus einem Permanenkleber an einer Innenteilfläche der den Laderaum (11) begrenzenden Wandung festgelegt ist.

5. Kraftwagen nach Anspruch 4, dadurch gekennzeichnet, daß die Klebemittelschicht (16) als ein durchgehender Klebestreifen ausgebildet ist.

6. Kraftwagen nach Anspruch 1, dadurch gekennzeichnet, daß die Abdeckplane (15) quadratisch oder rechteckig ausgebildet ist und an einem Rand mittels mechanischer Verbindungsmittel, wie z.B. Druckknöpfen oder Magnetplatten, an einer Innenteilfläche der den Laderaum begrenzenden Wandung festgelegt ist.

7. Kraftwagen nach einem oder mehreren der vorhergehenden Ansprüche, dadurch gekennzeichnet, daß die Abdeckplane (15) sich über die gesamte oder annähernd gesamte Breite der Ladeöffnung (12) erstreckt.

8. Kraftwagen nach einem oder mehreren der vorhergehenden Ansprüche, dadurch gekennzeichnet, daß die Länge der Abdeckplane (15) dem Abstand der Ladekante (14) vom Boden entspricht oder annähernd entspricht.

9. Kraftwagen nach einem oder mehreren der vorhergehenden Ansprüche, dadurch gekennzeichnet, daß die der Befestigungsseite abgewandt liegende Fläche der Abdeckplane (15) mit einer vollflächigen oder partiellen Beschichtung aus einem reflektierenden Material versehen ist.

10. Kraftwagen nach einem oder mehreren der vorhergehenden Ansprüche, dadurch gekennzeichnet, daß die der Befestigungsseite abgewandt liegende Fläche der Abdeckplane (15) mit Reflektoren bestückt ist.

11. Kraftwagen nach einem oder mehreren der vorhergehenden Ansprüche, dadurch gekennzeichnet, daß die Abdeckplane (15) aus einer Kunststofffolie besteht.

12. Kraftwagen nach einem oder mehreren der vorhergehenden Ansprüche, dadurch gekennzeichnet, daß die Klebemittelschicht (16) der Außenfläche, bezogen auf die Betriebslage der Abdeckplane (15), der Abdeckplane zugeordnet ist.

13

10

11

12

II

II

15

14

17

Fig.1

Fig.2

14

15

16

15

0 290 832

Honerkamp

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 902 752  (PELLETIER)<br>* Insgesamt *<br>--- | 1-3,6-8 ,11 | B 60 R   5/00<br>B 60 R   27/00 |
| X | DE-A-1 655 413  (TESCH)<br>* Insgesamt *<br>--- | 1-3,6-8 | |
| X | DE-A-1 905 131  (SCHWARZ)<br>* Insgesamt *<br>--- | 1,2,6-8 ,11 | |
| X | US-A-3 170 714  (STALKER)<br>* Insgesamt *<br>--- | 1,2,6-8 | |
| A | FR-A-1 279 832  (GALIMBERTI)<br>* Insgesamt *<br>----- | 4,5,9 | |

**RECHERCHIERTE SACHGEBIETE (Int. Cl.4)**

B 60 R

Der vorliegende Recherchenbericht wurde für alle Patentansprüche erstellt

| Recherchenort | Abschlußdatum der Recherche | Prüfer |
|---|---|---|
| DEN HAAG | 12-08-1988 | DUBOIS B.F.J. |